# EUROPEAN PATENT SPECIFICATION

(11) **EP 0 325 455 B1**
(45) Date of publication and mention of the grant of the patent: **15.03.1995**
(21) Application number: 89300501.7
(22) Date of filing: 19.01.1989
(51) Int. Cl.: G07F 17/34, G07F 9/08, H04L 12/42, H04L 12/28

(54) **Intercommunication method and system thereof**
Datenübertragungsverfahren und -system
Méthode et système d'intercommunication

(30) Priority: 22.01.1988 JP 10931/88
(43) Date of publication of application: 26.07.1989
(73) Proprietor: KABUSHIKI KAISHA UNIVERSAL, Oyama-shi,Tochigi-ken (JP)
(72) Inventor: Ishida, Naomi, 1-7-8 Hamacho Nihonbashi Chuo-ku Tokyo (JP)
(74) Representative: Ayers, Martyn Lewis Stanley

(56) References cited:
- EP-A- 0 091 129
- FR-A- 2 603 401
- JAPAN TELECOMMUNICATION REVIEW, vol. 27, no. 1, 1st January 1985, pages 34-40, Tokyo, JP; H. SHIRAKAWA: "100 mbits/s optical loop network supports"

## Description

The present invention relates to an intercommunication method and system thereof for communicating messages including data and commands in two-way between a master control unit (a central control unit) and each apparatus.

It has been well known to use a central control system in which a master control unit monitors and controls a plurality of apparatuses by connecting the master control unit and the apparatuses with communication cables in parallel. In this parallel-type central control system, messages are exchanged between the master control unit and the apparatuses in two-way through the communication cables, each of which comprises a plurality of signal lines including data bus and control signal lines. For example, casinos or game centers have a large number of slot machines which are connected to a master control unit with communication cables so as to control the operation of the slot machines and to gather the data such as the number of coins or tokens (which is hereinafter referred to merely as coins) inserted into each slot machine, the number of coins paid out for hits from each slot machines, and the number of games played in each slot machine.

There is a so-called progressive method for jack-pot hit processing ("jack-pot" is the greatest hit for a slot machine game). The parallel-type central control system is suitable especially for the jack-pot processing in this progressive method. In the progressive method, the number of coins to be paid out for a jack-pot hit continue to increase till the next jack-pot hit will occur, starting from zero. The details are as follows. When a master control unit controls a plurality of slot machines, for example, thirty slot machines as one group, the master control unit always accumulate amount of money corresponding to the number of coins inserted into each slot machine of the group. When a jack-pot hit occurs in one of the slot machines, the master control unit sends the slot machine a message including a command on the number of coins to be paid out. This number corresponds to a predetermined percentage of the increasing amount of money. Therefore, the number of coins to be paid out for a jack-pot hit is not fixed but varies every time. And whenever coins are paid-out for a jack-pot, the data of the accumulated amount of money is cleared to zero. Data such as the number of paid-out coins for every jack-pot hit are stored in the memory of the master control unit and indicated for monitoring on the display of the master control unit.

To communicate with the master control unit, a slave unit basically having a micro processor unit and a storing device is provided in every slot machine. These slave units and the master control unit are conventionally connected in parallel, resulting in provision of a lot of communication cables. When more slot machines are additionally placed, very long communication cables are necessary because the location for the added slot machine becomes inevitably further away from the control unit as the number of the slot machine increases. These long communication cables are subject to electrical noises and exposed to greater danger of disconnection. In summary, the conventional parallel-connection central control system has defects: one is that many long communication cables are necessary; and another is that if once a communication cable is disconnected, the corresponding slot machine is cut off from the master control unit, causing the slot machine to fall out of control.

It is known from EP-A-0091129 to connect in series a plurality of stations and a control unit or control station. The latter controls the operation of the network of stations and detects when a failure occurs in the network.

The control station includes two different transmission devices which transmit two different signals (data and monitor signals) through the network.

The serially connected stations define a closed loop; said two transmission devices are connected to both ends of said loop and continuously transmit their signals in opposite directions through the network of station.

Therefore all the transmission devices are operated all the time.

From the prior art it is also known to use optical fibers in a network of stations connected to a central unit which controls their operation as described in an article of Japan Telecommunication Review published in January 1985.

Moreover FR-A-2603401 discloses a control system to check slot machines and to control their operations in which each slot machine is identified by its own address or identity code.

It is an object of the present invention to provide an intercommunication method and system thereof, by which it is not necessary to provide long communication cables for connecting a master control unit and each apparatus even though the number of apparatuses is great.

It is another object of the present invention to provide an intercommunication method and system thereof, by which electrical noises and danger of disconnection are substantially reduced.

It is still another object of the present invention to provide an intercommunication method and system thereof, in which a master control unit and apparatuses are connected in a loop through communication cables so that the intercommunication can continue in reverse direction of the loop if a communication cable is disconnected.

One aspect of the present invention provides a communication method in which addressed messages are issued from a master control unit having a first communication unit and elicits corresponding responses from any selected one of at least three addressed apparatuses, comprising the steps of: connecting all of said apparatuses in a series through first communication lines and first and second send/receive units provided for each apparatus;
connecting a first of said apparatuses with said first communication unit through a second communication line;
connecting a second communication unit of said master control unit with a last apparatus of said apparatuses through a third communication line to form a looped circuit;
actuating one of said first and second communication units so as to transmit an addressed message in one of first and opposite directions, respectively;
transferring said addressed message in a first direction through said series from one apparatus to another adjacent apparatus so as to effect intercommunication between said master control unit and any selected one of said apparatus and when it is impossible to continue intercommunication with part of said apparatus by using only one of said first and second communication units due to line trouble, the other of said first and second communication unit is actuated so as to communicate with said part of the apparatuses;
characterised in that each apparatus transmits a response signal through said series in a direction opposite said first direction whenever it receives from said first communication unit a message bearing its address and also sends on the message to the next apparatus in the first direction;
and a decision whether the cause of said impossibility of intercommunication is due to said line trouble or not is performed by monitoring whether said master control unit receives within a fixed time at said second communication unit the said message sent on by the addressed apparatus in the first direction.

Another aspect of the present invention provides a communication system for transmitting messages to and from at least three addressed apparatuses which are able to transmit and receive said messages via two send/receive units, comprising:
a master control unit for issuing addressed interrogation messages;
a first communication unit in said master control unit, said addressed interrogation messages being transmitted through said first communication unit;
a plurality of first communication lines through which said apparatuses are connected in a series;
a second communication line through which an apparatus at one end of said series-connected apparatuses and said first communication unit are connected, whereby said addressed interrogation messages are conveyed by said first communication unit in a first direction trough said series;
a second communication unit provided in said master control unit, said addressed interrogation messages being transmitted in said opposite direction through said second communication unit;
a third communication line through which an apparatus at the other end of said series-connected apparatuses and said second communication unit are connected; and
characterised by means causing each of said least three apparatuses to convey a response signal to said first communication unit through said series in a direction opposite said first direction wherever a said apparatus receives from said first communication unit an interrogation message bearing its address;
means causing each of said plurality of apparatuses to convey a response signal to said second communication unit through said series in said first direction whenever a said apparatus receives from said second communication unit an interrogation message bearing its address.

These and other objects and features of the invention will be seen by reference to the following description, taken in connection with the accompanying drawing in which:
Figure 1 is a schematic view showing an embodiment of an intercommunication system according to the present invention;
Figure 2 is a block diagram showing a master control unit of the embodiment of Figure 1.
Figure 3 is a block diagram showing a slave unit of the embodiment of Figure 1.
Figure 4 is a time chart explaining sending/receiving of message between the slave unit and a slot machine control unit of the embodiment of Figure 1.
Figure 5 is a time chart explaining sending/receiving of message between the master control unit and the slot machine control unit through the slave unit.
Figure 6 is an illustration explaining basic format of a message used in communication by the embodiment of Figure 1.
Figure 7 is a command code table, the command code being including in message in communication by the embodiment of figure 1.
Figure 8 is an illustration explaining a data request message used in communication by the embodiment of Figure 1.
Figure 9 is an illustration explaining a coin data message used in communication by the embodiment of Figure 1.
Figure 10 is a time chart explaining the operation of switching of communication units of the embodiment of Figure 1.
Figure 11 is an illustration explaining a jack-pot occurrence message used in communication by the embodiment of Figure 1.
Figure 12 is an illustration explaining a jack-pot occurrence message used in communication by the embodiment of Figure 1.

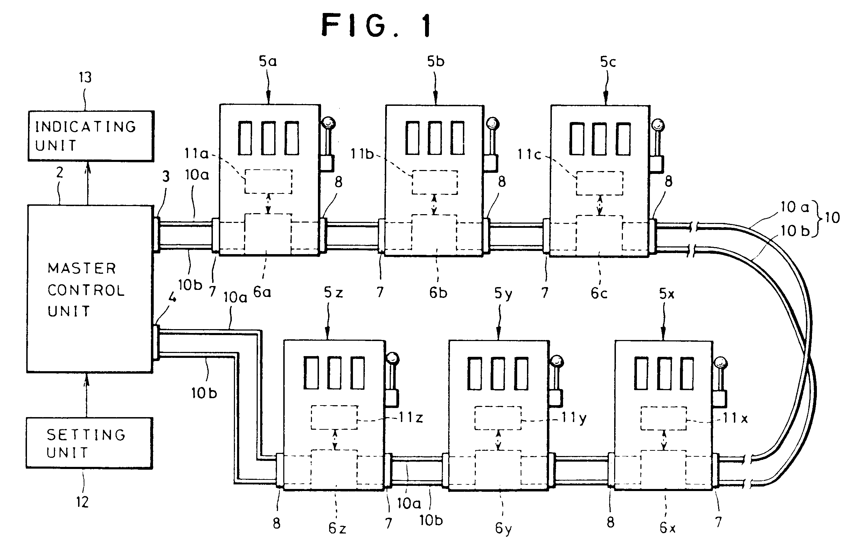

Referring now to the drawings, wherein like reference characters designate like or corresponding parts throughout the twelve views, Figure 1 shows a central control system for controlling slot machines, embodying the present invention. A master control unit 2 is provided with a pair of first and second connectors 3 and 4 having quite the same construction. Provided in a plurality of slot machines 5a, 5b, 5c, ---, 5x, 5y, and 5z are a plurality of slave unit 6a, 6b, 6c, ---, 6x, 6y, and 6z respectively, each having a pair of first and second connectors 7 and 8.

The first connector 3 of the master control unit 2 is connected with the first connector 7 of the slave unit 6a through a pair of communication line 10 comprising a transmitting cable 10a and a receiving cable 10b. The second connector 8 of the slave unit 6a is connected with the first connector 7 of the next slave unit 6b through the communication line 10. By repeating such connection with the communication line 10, all of the slave units 6a to 6z are connected in series. Next, the second connector 8 of the last slave 6z is connected with the second connector 4 of the master control unit 2 through the communication line 10. After all, the master control unit 2 and the slave unit 6a to 6z forms a looped communication circuit. Each of the slot machines 5a to 5z incorporates respective slot machine control units 11a, 11b, 11c, ---, 11x, 11y, 11z incorporating a micro processor for controlling their individual operation of the slot machines. Each of the slave units 6a to 6z sends and receives message including data and commands with the corresponding one of the slot machine control units 11a to 11z. There are provided with a setting unit 12 and a indicating unit 13 which are connected to the master control unit 2. The setting unit 12 includes a keyboard for entering data used for controlling the slot machines 5a to 5z. The indicating unit 13 can indicate the amount of money corresponding to the number of paid-out coins for a jack-pot (which is hereinafter referred to as a JP).

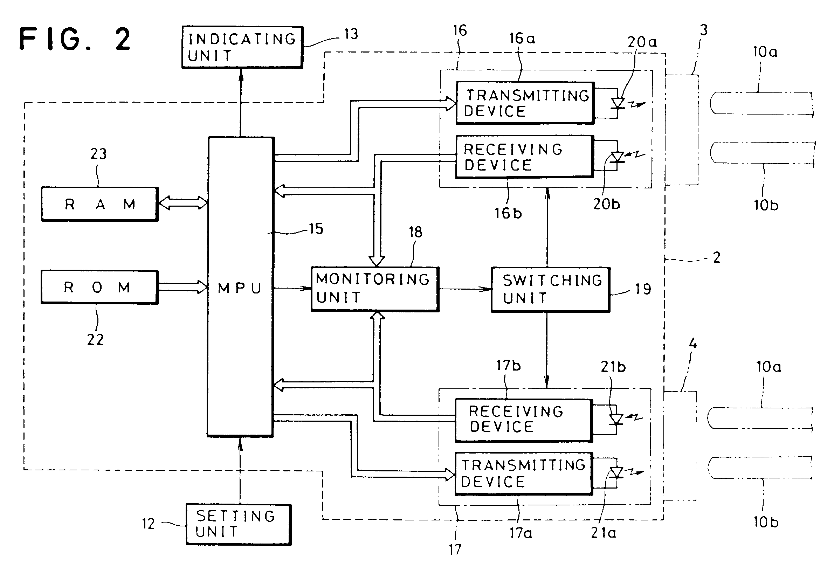

As shown in Figure 2, provided in the master control unit 2 are the first and second connectors 3 and 4, a micro processor unit (MPU) 15, first and second communication units 16 and 17, a monitoring unit 18, a selecting unit 19, a ROM 22, and a RAM 23. The first and second communication units 16 and 17 have the same structure and function that sends messages to the slave units 6a to 6z and receives messages therefrom. The first communication unit 16 is connected with the first connector 3 and provided with a transmitting device 16a and a receiving device 16b. The second communication unit 17 is connected with the second connector 4 and provided with a transmitting device 17a and a receiving device 17b. The monitoring unit 18 monitors the state of the communication by checking the outputs of the first and second communication units 16 and 17 and outputs signals representing the state of the communication. According to the output of the monitoring unit 18, the selecting unit 19 selects one of the first and second communication units 16 and 17 and make it effective. Therefore, the communication with the slave units is carried out by only using one of the communication units 16 and 17.

In this embodiment, for optical communication, the transmitting devices 16a and 17a have light-emitting diodes 20a and 21a, and the receiving devices 16b and 17b have photo diodes 20b and 21b. It is to be noted that, as described before, only one of the communication units 16 and 17 is electrically effected by the selecting unit 19. The transmitting and receiving cables 10a and 10b are made of optical fiber cables. The ends of these cables 10a and 10b are connected to the connectors 3 and 4, fixing the end faces of the cables 10a and 10b so as to face the light-emitting diodes 20a and 21a and the photo diodes 20b and 21b.

Executing and processing programs for the communication are stored in the ROM 22 to operate the communication units 16 and 17 and the monitoring unit 18 in predetermined sequences and to rewrite the data stored in the RAM 23 according to data in messages from the slave units 6a to 6z.

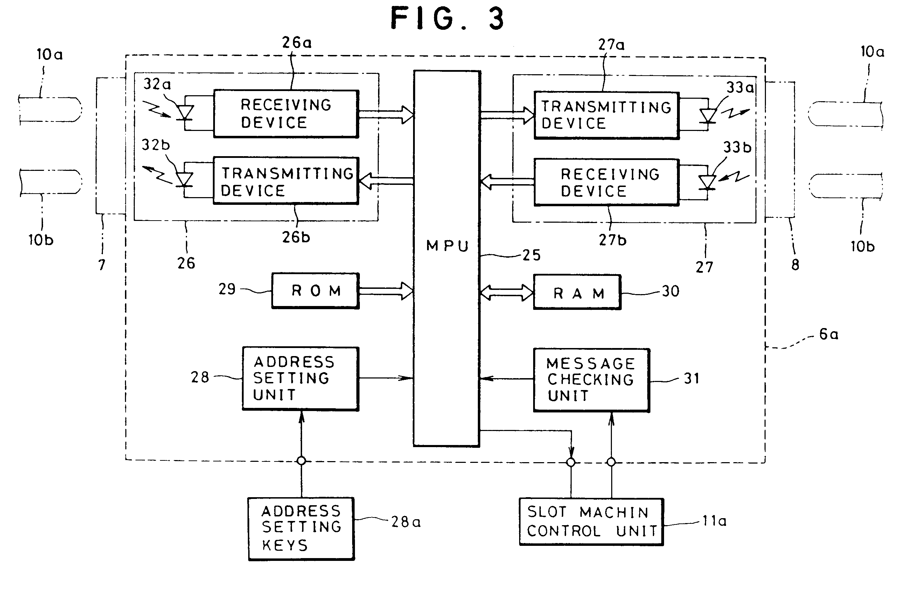

Figure 3 shows the schematic diagram of the slave unit 6a which are the same as the other slave units 6b to 6z. Therefore, the explanation for the slave units 6a to 6z will be done only for the slave unit 6a. The slave unit 6a comprises a micro processor unit (MPU) 25, a first communication unit 26 having a receiving device 26a and a transmitting device 26b, a second communication unit 27 having a second receiving device 27a and a second transmitting device 27b, an address setting unit 28 for alocating an address to the slave unit 6a, a ROM 29, a RAM 30, and message checking unit 31. The ROM 29 stores a sequential-processing program for the slave unit 6a, according to which the micro processor unit 25 will operate. In the message checking unit 31, message from the slot machine control unit 11a are checked whether the message meets the condition of a predetermined format or not. This slot machine control unit 11a controls the sequence and processes of the games of the slot machine 5a and outputs data such as the number of inserted coins to the slave unit 6a for JP process in the progressive method.

The first and second receiving devices 26a and 27a have photo diodes 32a and 33b for receiving signals of messages respectively, and the first and second transmitting device 26b and 27a have light-emitting diodes 32b and 33a for transmitting signals of messages. The photo diodes 32a and 33b and the light-emitting diodes 32b and 33a are the same in specification as those used for the receiving and transmitting devices 16a, 16b, 17a, and 17b in the master control unit 2 which performs optical communication.

Next, the operation of the embodiment is described in detail when JP processing is performed in the progressive method. In this progressive method, the number of coins to be paid-out for a JP hit is determined according to a predetermined percentage, e.g., 10% of the amount of money corresponding to the accumulated number of coins which have been inserted into the slot machines 5a to 5z since the previous occurrence of a JP hit. The percentage may be set or changed with the setting unit 12 at any time.

Each of the slot machine control units 11a to 11z controls the each slot machine with respect to, in the order of operation sequence of the slot machine for a game, detection of insertion of coins; measurement of the number of inserted coins; detection of pulling of the slot machine start lever; operation of the start and stop of the slot machine reels; decision of whether the game is to be a hit or fail and of the kind of hit when the game has won a hit; operation of paying-out coins according to the kind of the hit when the game wins the hit. When coins are inserted for a game, the slot machine control unit generates and sends a coin data message to the slave unit. The coin data message comprises a series of several bytes including a start code for the first byte of 8 bits, a coin data code for an intermediate byte, and an end code for the last byte. The coin data is, concretely, the number of inserted coins.

Referring to Figure 3, the coin data message is sent to the message checking unit 31 of the slave unit 6a from the slot machine control unit 11a so as to be checked in format, and only when the coin data message is correct in format, the micro processor unit (MPU) 25 stores the data in the RAM 30. When the coin data message is judged to be incorrect in format, the microprocessor unit 25 refuses to receive the signal, and then the coin data is not stored in the RAM 30.

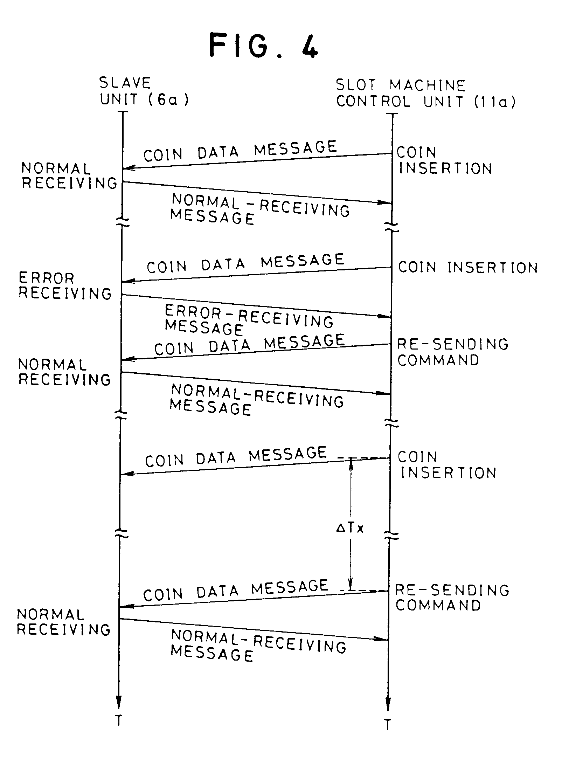

Figure 4 shows an example of message communication between the slave unit 6a and the corresponding slot machine control unit 11a. Only the communication with respect to the slave unit 6a is explained because communications of the other slave units 6b to 6z are the same as that of the salve unit 6a. When correctly receiving a coin data message from the slot machine control unit 11a, the slave unit 6a sends a normal receiving message to the slot machine control unit 11a. On the contrary, when incorrectly receiving a coin data message from the slot machine control unit 11, the slave unit 6a sends an error-receiving message to the slot machine control unit 11a. in this case, the slot machine control unit 11a again sends the same coin data message to the slave unit 6a. Further, when no normal receiving message is sent to the slot machine control unit 11a from the slave unit 6a for a predetermined time tₓ, the slot machine control unit 11a sends the coin data message again. Such communication is also done between each of other slave units 6b to 6z and the corresponding one of the slot machine control units 11b to 11z and the data of the number of the inserted coins is stored in each of RAMs 30.

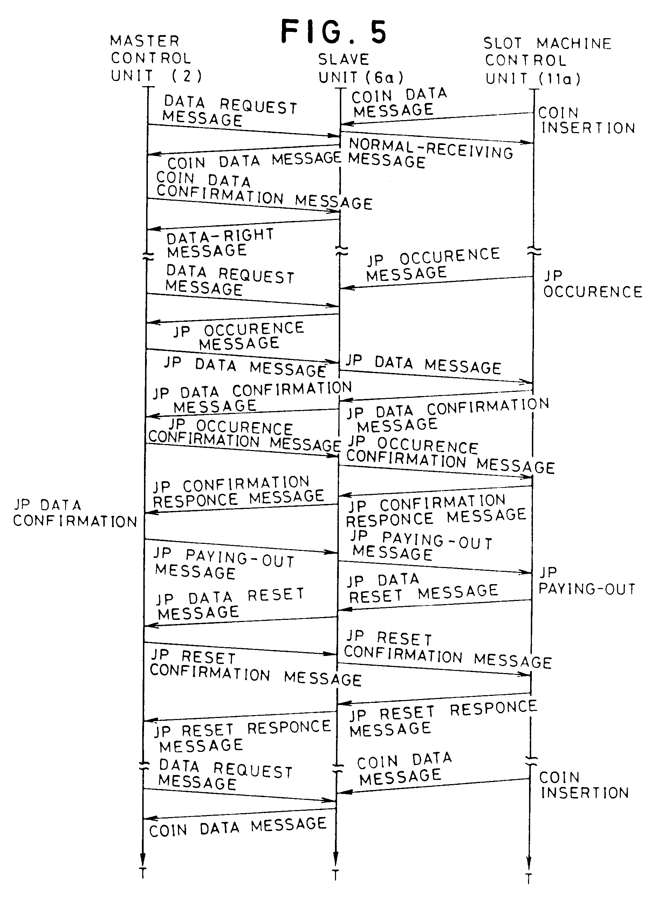

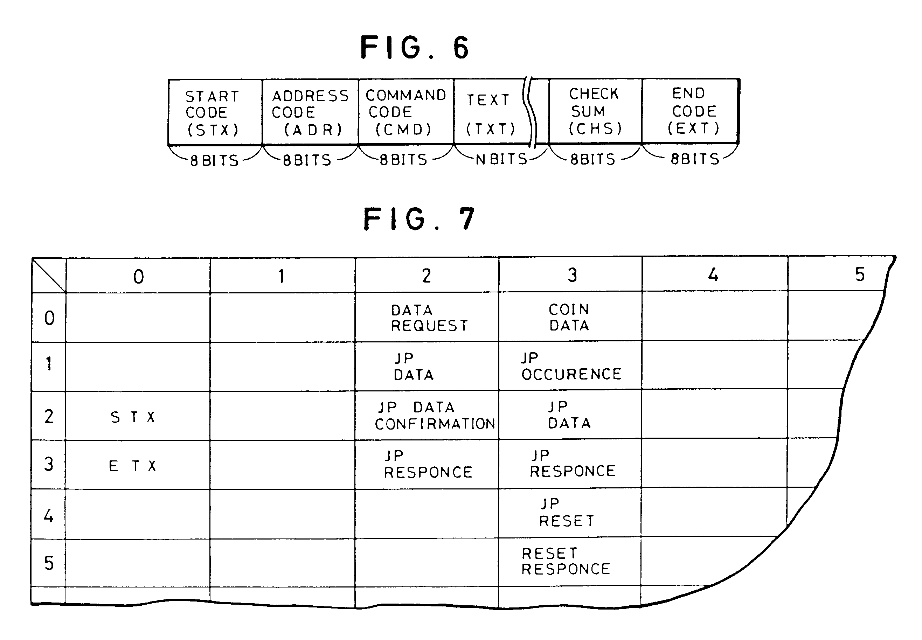

The message communication between the slave unit 6a and the master control 2 is illustrated in a time chart of the Figure 5. A message including data and commands are generally constructed according to a basic format shown in Figure 6. The message consists of serial codes which are a start code (STX), an address code (ADR), a command code (CMD), a text (TXT), a check sum (CHS), and an end code (EXT), each being represented by combination of a binary digit "1" or "0". Each code consists of 8 bits except for the text (TXT).

A command code table is shown in Figure 7 in which upper four digits are listed in row and lower digits are in column. According to the table, the start code is represented by "02" in hexadecimal, e.g., "&H02", the end code is "&H03", the data request command is "&H20", and the coin data code is "&H30". The check sum (CHS) is obtained, first by making an exclusive OR operation in which each digit from the start code (STX) to the text (TXT) for each digit of lower seven bits is added eliminating their carries, and secondly by setting the most significant bit (MSB) "1". The check sum (CHS) obtained in this way is used, as is well known, to make sure that the message includes no error data.

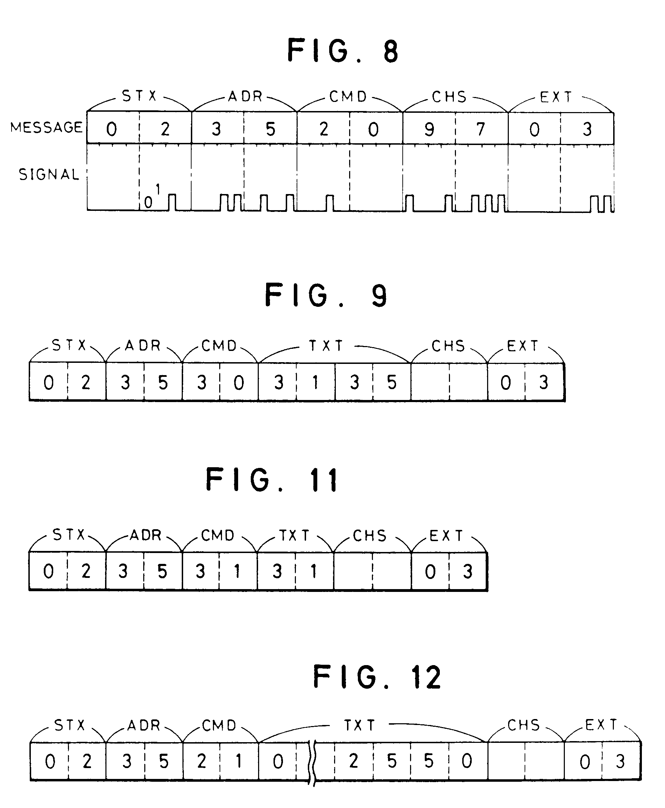

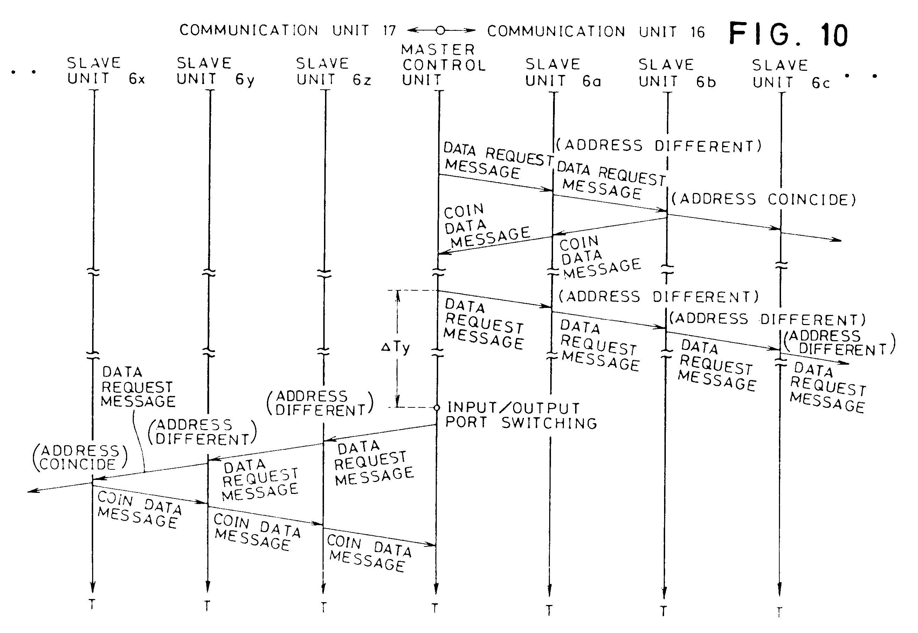

The master control unit 2 periodically sends data request messages at a constant duration to the slave unit 6a according to a sequence program stored in the ROM 22. The structure of the data request message is schematically shown in Figure 8. In Figure 8, also their actual serial binary signals corresponding to the data request message are shown. For example, at the time corresponding to the binary signal "1", the light emitting diode 20a provided on the transmitting device 16a of the master control unit 2 will turns on. Therefore, the data request message and other messages are transmitted to the slave unit 6a in a form of a series of light on-and-off signals through the transmitting line 10.

As shown in Figure 8, when the address code in the data request message is "&H35", the address code &H35 specifies a slave unit having an address "5". When the slave unit 6a has an address "5", the slave unit 6a receives the data request message and in reply sends the coin data message including the number of the inserted coins, which is read from the RAM 30.

After the master control unit 2 have received the coin data message, the master control unit 2 sends a coin data confirmation message to the slave unit 6a to confirm whether the number is true or not. Then, the slave unit 6a collates the number of the inserted coins in the coin data confirmation message with the number of the inserted coins stored in the RAM 30. When the numbers coincides, the slave unit 6a sends a normal-receiving message to the master control unit 2 and simultaneously clears the data in the RAM 30. If the numbers do not coincide, an abnormal message is sent from the slave unit 6a to the master control unit 2, and again the same data request message is sent to the slave unit 6a.

The slave unit 6a transfers the data request message from the master control unit 2 to the next slave unit 6b, through the transmitting device 27a whether or not the address code in the data request message coincides with the address of the slave unit 6a. Similarly, the next slave unit 6b also transfers the data request message to the slave unit 6c. In this way, the data request message is transferred by all the slave units and finally, reaches the communication unit 17 of the master control unit 2, making a round of transmission in this looped communication circuit. By effecting the receiving device 17b of the second communication unit 17 while the first communication unit 16 is effective, the transmitting state of at least the communication cable 10a may be monitored by checking the outputs of the receiving device 17b by the monitoring unit 18.

A coin data message is schematically illustrated in Figure 9, in which, following a command code having a code "&H30" representing that this message is a coin data message, a text block having codes "&H31" and "&H35" representing the number of coins is shown. These data "&H31" and "&H35" mean that the number of inserted coins into the slot machine 5a is fifteen. The coin data message, as described before, is made of a series of light on-and-off signals by the light-emitting diode 32b in the transmitting device 26b to be sent to the photo diode 20b of the master control unit 2 through the communication cable 10b. The coin data message sent from the slave unit 6a is stored in the RAM 23 of the master control unit 2.

Next, the master control unit 2 sends a data request message having a different address code "&H36" specifying an address "6". In this time, the micro processor unit (MPU) 25 of the slave unit 6a refuses to receive the message by distinguishing that the specified address "6" differs from the address "5", and transfers the message as it is to the slave unit 6b through the transmitting cable 10a. If the alocated address of the slave unit 6b is "6", the slave unit 6b receives the message and then, in reply, transmits a coin data message as to the slot machine 5b, through the transmitting cable 10b to the slave unit 6a. The slave unit 6a receives the message at the receiving device 27b and transmits it as it is from the transmitting device 26b to the master control unit 2.

The master control unit 2, in this way, sends data request messages successively to the other slave unit 6c to 6z, varying the address code. The master control unit 2 can accordingly obtain the coin data, namely, the number of inserted coins, of the slot machines 5a to 5z. The number of inserted coins is stored in the RAM 23. Further, the master control unit 2 accumulates the number of coins inserted in all of the slot machines and stores in the RAM 23. Cyclically, the master control unit 2 continues to send data request messages successively to all of the slave units 6a to 6z, thus accumulating the number of coins in the RAM 23 until the next JP hit will occurs.

Due to disconnection of a cable connecting, for example, the slave units 6w and 6x, the message with an address code specifying the slave unit 6x can not reach the slave unit 6x. Hence, the master control unit 2 does not receive any coin data message from the slave unit 6x. As illustrated in Figure 10, if the monitoring unit 18 detects that no coin data message from any one of the slave units 6a to 6z has been received for a pre-fixed time Δt_{y} since a data request message was transmitted out from the master control unit 2, the selecting unit 19 makes the second communication unit 17 effective alternatively instead of the first communication unit 16. Then, the same data request messages are transmitted through the transmitting device 17b in a reverse direction in the looped communication circuit, reaching the slave unit 6x. The slave unit 6x sends its coin data message in response from the transmitting device of the second communication unit 27 having the connector 8 to the second communication unit 17 of the master control unit 2. For next cycle of communication with the slave units, the first communication unit 16 is made effective again. In this way, even if a cable disconnection occurs in this system, the master control unit 2 can obtains messages from all of the slave units 6a to 6z by alternatively using both the first and second communication units 16 and 17 to continue the communication without suspention.

The time duration Δt_{y} is set to be a little longer than period from the time when the data request message is fed from the master control unit 2 until the time when the response message from a corresponding slave unit reaches the master control unit 2. An indicator may be provided to indicate which communication cable is disconnected. After re-connection of this communication cable, again the intercommunication by means of only the first communication unit 16 can continue.

Next, a sequence of message exchanging between the master control unit 2 and one of slot machine control units 6a to 6z will be explained as to when a JP hit occurs in the corresponding slot machine. If a JP hit takes place, for example, in the slot machine 5a, a message having data representing the occurrence of a JP hit is sent from the slot machine control unit 11a to the slave unit 6a in order to store the data in the RAM 30. When a data request message for the slave unit 6a is sent from the master control unit 2, the slave unit 6a sends a JP occurrence message, whose the schematic structure is illustrated in Figure 11. In the command code (CMD) and text (TXT) of this JP occurrence message, the data "&H31" is contained commonly.

The master control unit 2 receives the JP occurrence message and calculates the amount of money to be paid-out according to the predetermined percentage, for example, 10%, and the accumulated total number of the inserted coins, the number being stored in the RAM 23. Then, the master control unit 2 sends a JP data message which represents the amount of money to be paid-out to the slave unit 6a. An example of the JP data message is shown in Figure 12, in which the command code (CMD) "&H21" represents that this message is a JP data message and the text (TXT) "&H2550" represents that the amount of money is 2550 . The number digits of the text code (TXT) is previously set according to the maximum number of digits of the amount of money to be paid-out for a JP hit.

When this JP data message is supplied to the slot machine control unit 11a through the corresponding slave unit 6a, the slot machine control unit 11a stores the data of the amount of money to be paid out and sends a JP data confirmation message for confirming that the data is correctly sent from the master control unit 2. This message includes a command code (CMD) "&H33" representing a JP response and a text code representing the amount of money.

The master control unit 2 judges whether the text code in this JP data confirmation message is true or not by comparing with the data of the calculated amount of money to be paid-out. When the data is true, a JP occurrence confirmation message is fed to the slot machine control unit 11a through the slave unit 6a. Then, the slot machine control unit 11a reconfirms that a JP hit has surely occurred in this slot machine 5a and sends a JP confirmation response message to the master control unit 2 so that the master control unit 2 makes a final confirmation of the occurrence of a JP hit in the slot machine 5a.

After the final confirmation, the master control unit 2 sends a JP paying-out message to the slave unit 6a, which instructs the slot machine control unit 11a, upon reception of the JP paying-out message, to pay out coins according to the amount of money to be paid-out as specified in the JP data message. After the actual paying-out of the coins, the slot machine control unit 11a sends a JP data reset message to the master control unit 2 through the slave control unit 6a. This JP data reset message includes a command code "&H34" representing reset of data in the RAM 23 of the master control unit 2. After receiving the JP data reset message, the master control unit 2, for confirmation, a JP reset confirmation message to the slot machine control unit 5a and then, the slot machine control unit 5a sends a JP reset response message to the master control unit 2. When the master control unit 2 is received the JP reset response message, the master control unit 2 finally clears the data in the RAM 23 which represents the accumulated number of inserted coins, causing the indicated value to be zero on the indicating device 13.

As described before, if no response message in response of a message sent from the master control unit 2 has been received from any of slave units 6a to 6z for a pre-fixed time due to cable disconnection or trouble of a communication unit, the same message is sent from the master control unit 2, avoiding interruption of communication, by effecting the second communication unit 17 instead of the first communication unit 16, passing the looped communication circuit in reverse direction.

Because usually the probability of occurrence of JP hits is determined to be extremely small, next JP hit scarcely ocuurs immediatly after a JP hit. Accordingly, the total number of coins inserted in all of the slot machines becomes sufficiently large. However, it is to be noted that the next JP hit can rarely occur immediately after a JP hit. In this case, the total number of inserted coins is so small that the number of coins to be paid out is not suitable for a JP hit, the greatest hit. Therefore, when the number of coins to be paid out according to the total number of inserted coins is smaller than a predetermined number, the predetermined number of coins is actually paid out.

In this embodiment, a message is transferred to the next stage of a slave unit even if the message is received by a slave unit having an address specified by the address code in the message. However, the message may not be necessarily transferred to the next stage of the slave unit. In this case, one of the first and second communication units 16 and 17 can be in rest state. Though an optical fiber cable is used in the embodiment, only single optical fiber may be used because messages consist of serial light signal. Further, instead of the optical communication system, conventional electrical communication system may be used, in this case a communication cable comprising data bus, control signal lines and so forth can be used.

Further, this intercommunication system may be used for another uses, not limited to only the JP processing, for acquisition of data such as the kind and number of hits for all slot machines or the number of coins stored in each of the slot machines for preparation of paying-out.

Moreover, the present invention can be applied to other kinds of apparatus such as pinball machine.

Although only one embodiment of the invention has been disclosed and described, it is apparent that other embodiments and modification of the invention are possible.

## Claims

1. A communication method in which addressed messages are issued from a master control unit (2) having a first communication unit (16) and elicits corresponding responses from any selected one of at least three addressed apparatuses (6a-6z), comprising the steps of:
connecting all of said apparatuses (6a-6z) in a series through first communication lines (10) and first and second send/receive units (26,27) provided for each apparatus (6a-6z);
connecting a first of said apparatuses (6a) with said first communication unit (16) through a second communication line (10);
connecting a second communication unit (17) of said master control unit (2) with a last apparatus of said apparatuses (6a-6z) through a third communication line (10) to form a looped circuit;
actuating one of said first and second communication units (16,17) so as to transmit an addressed message in one of first and opposite directions, respectively;
transferring said addressed message in a first direction through said series from one apparatus (6a-6z) to another adjacent apparatus (6a-6z) so as to effect intercommunication between said master control unit (2) and any selected one of said apparatus; and when it is impossible to continue intercommunication with part of said apparatus by using only one of said first and second communication units (16,17) due to line trouble, the other of said first and second communication units (16,17) is actuated so as to communicate with said part of the apparatuses (6a-6z);
characterised in that
each apparatus transmits a response signal through said series in a direction opposite said first direction whenever it receives from said first communication unit a message bearing its address and also sends on the message to the next apparatus in the first direction;
and a decision whether the cause of said impossibility of intercommunication is due to said line trouble or not is performed by monitoring whether said master control unit (2) receives within a fixed time at said second communication unit (16,17) the said message sent on by the addressed apparatus (6a-6z) in the first direction.

2. A communication method as claimed in claim 1, wherein:
each apparatus (6a-6z) transmits a response signal on said first communication lines (10) through said series in said first direction whenever it receives a message bearing its address transmitted in said opposite direction on said first communication lines (10) from said second communication unit (17).

3. A communication method according to claim 1 or 2, wherein said send/receive units (26,27) are controlled such that any selected one of said apparatuses (6a-6z) receiving a message bearing its address at said first send/receive unit (26) transmits a response signal from said first send/receive unit (26), and any selected one of said apparatuses receiving a message bearing its address at said second send/receive unit (27) transmits a response from said second send/receive unit (27).

4. A communication system for transmitting messages to and from at least three addressed apparatuses (6a-6z) which are able to transmit and receive said messages via two send/receive units (26,27), comprising:
a master control unit (2) for issuing addressed interrogation messages;
a first communication unit (16) in said master control unit (2), said addressed interrogation messages being transmitted through said first communication unit (2);
a plurality of first communication lines (10) through which said apparatuses (6a-6z) are connected in a series;
a second communication line (10) through which an apparatus (6a-6z) at one end of said series-connected apparatuses (6a-6z) and said first communication unit (16) are connected, whereby said addressed interrogation messages are conveyed by said first communication unit (16) in a first direction through said series;
a second communication unit (17) provided in said master control unit (2), said addressed interrogation messages being transmitted in said opposite direction through said second communication unit (17);
a third communication line (10) through which an apparatus (62) at the other end of said series-connected apparatuses (6a-6z) and said second communication unit (17) are connected;
characterized by
means causing each of said at least three apparatuses (6a-6z) to convey a response signal to said first communication unit (16) through said series in a direction opposite said first direction whenever a said apparatus (6a-6z) receives from said first communication unit (16) an interrogation message bearing its address;
means causing each of said plurality of apparatuses (6a-6z) to convey a response signal to said second communication unit (17) through said series in said first direction whenever a said apparatus (6a-6z) receives from said second communication unit (17) an interrogation message bearing its address.

5. A communication system as claimed in claim 4, further comprising:
a switching unit (19) in said master control unit (2) for actuating either one of said first and second communication units (16,17).

6. A communication system as claimed in claim 5, further comprising:
a monitoring unit (18) in the master control unit for monitoring said messages and for actuating the other of said first and second communication units (16,17) when said monitoring unit (18) detects that abnormality of message transmission has occurred.

7. A communication system as claimed in claim 4, 5 or 6, wherein each of said apparatuses (6a-6z) has a slave unit having third and fourth communication units (26,27) for transmitting and receiving said interrogation messages and response signals.

8. A communication system as claimed in claim 7, wherein said first and second communication units (16,17) of said master control unit (2) and each of said slave units have a transmitting device and a receiving device, and said first, second, and third communication lines comprise a transmitting line (10a) and receiving line (10b).

9. A communication system as claimed in claim 10, wherein each of said first, second, third, and fourth communication units is provided with a light-emitting device and a light-receiving device for optical communication, and said communication lines are optical fibre cables.

10. A communication system as claimed in any one of claims 4 to 9 wherein said apparatuses (6a-6z) are slot machines.

11. A communication system according to any one of claims 4 to 10 comprising means for controlling said send/receive units (26,27) such that any selected one of said apparatuses (6a-6z) receiving a message bearing its address at said first send/receive unit (26) transmits a response signal from said first send/receive unit (26), and any selected one of said apparatuses (6a-6z) receiving a message bearing its address at said second send/receive unit (27) transmits a response from said second send/receive unit (27).

## Patentansprüche

1. Informationsaustauschverfahren, in dem adressierte Nachrichten von einer übergeordneten Steuereinheit (2) ausgegeben werden, die eine erste Informationsaustauscheinheit (16) enthält und von irgendeinem gewählten von wenigstens drei adressierten Geräten (6a-6z) entsprechende Antworten abruft, und das die folgenden Schritte enthält:
Anschließen aller Geräte (6a-6z) in einer Reihe über erste Informationsaustauschleitungen (10) und erste und zweite Sende-/Empfangseinheiten (26, 27), die für jedes Gerät (6a-6z) vorgesehen sind;
Anschließen eines ersten der Geräte (6a) an die Informationsaustauscheinheit (16) über eine zweite Informationsaustauschleitung (10);
Anschließen einer zweiten Informationsaustauscheinheit (17) der übergeordneten Steuereinheit (2) mit dem letzten dieser Geräte (6a-6z) über eine dritte Informationsaustauschleitung (10), um eine Schleifenschaltung zu bilden;
Betätigen der ersten oder der zweiten Informationsaustauscheinheit (16, 17), um eine adressierte Nachricht in einer ersten bzw. in der dazu entgegengesetzten Richtung zu senden;
Übertragen der adressierten Nachricht in einer ersten Richtung durch die Reihe von einem Gerät (6a-6z) zu einem weiteren, benachbarten Gerät (6a-6z), um einen Informationsaustausch zwischen der übergeordneten Steuereinheit (2) und irgendeinem ausgewählten der Geräte auszuführen; wobei dann, wenn es aufgrund eines Leitungsproblems nicht möglich ist, den Informationsaustausch mit einem Teil der Geräte unter Verwendung lediglich einer der ersten und zweiten Informationsaustauscheinheiten (16, 17) fortzusetzen, die andere der ersten und zweiten Informationsaustauscheinheiten (16, 17) betätigt wird, um einen Informationsaustausch mit diesem Teil der Geräte (6a-6z) auszuführen;
dadurch gekennzeichnet, daß
jedes Gerät durch die Reihe in einer zur ersten Richtung entgegengesetzten Richtung ein Antwortsignal sendet, sooft es von der ersten Informationsaustauscheinheit eine Nachricht empfängt, die seine Adresse trägt, und außerdem die Nachricht zum nächsten Gerät in der ersten Richtung sendet;
und daß durch die Überwachung, ob die übergeordnete Steuereinheit (2) während eines festen Zeitintervalls an der zweiten Informationsaustauscheinheit (16, 17) die vom adressierten Gerät (6a-6z) in der ersten Richtung gesandte Nachricht empfängt, eine Entscheidung herbeigeführt wird, ob die Ursache für die Unmöglichkeit des Informationsaustauschs durch ein Leitungsproblem bedingt ist oder nicht.

2. Informationsaustauschverfahren nach Anspruch 1, bei dem:
jedes Gerät (6a-6z) auf den ersten Informationsaustauschleitungen (10) durch die Reihe in der ersten Richtung ein Antwortsignal sendet, sooft es eine seine Adresse tragende Nachricht empfängt, die auf den ersten Informationsaustauschleitungen (10) von der zweiten Informationsaustauscheinheit (17) in der entgegengesetzten Richtung gesandt wird.

3. Informationsaustauschverfahren nach Anspruch 1 oder 2, bei dem die Sende-/Empfangseinheiten (26, 27) in der Weise gesteuert werden, daß irgendein gewähltes der Geräte (6a-6z), das an seiner ersten Sende-/Empfangseinheit (26) eine seine Adresse tragende Nachricht empfängt, ein Antwortsignal von der ersten Sende-/Empfangseinheit (26) sendet und irgendein gewähltes der Geräte, das an seiner zweiten Sende-/Empfangseinheit (27) eine seine Adresse tragende Nachricht empfängt, eine Antwort von der zweiten Sende-/Empfangseinheit (27) sendet.

4. Informationsaustauschsystem zum Senden von Nachrichten an wenigstens drei adressierte Geräte (6a-6z) oder von diesen Geräten (6a-6z), die ihrerseits die Nachrichten über zwei Sende-/Empfangseinheiten (26, 27) senden und empfangen können, mit:
einer übergeordneten Steuereinheit (2), die adressierte Abfragenachrichten ausgibt;
einer ersten Informationsaustauscheinheit (16) in der übergeordneten Steuereinheit (2), wobei die adressierten Abfragenachrichten durch die erste Informationsaustauscheinheit (2) gesandt werden;
mehreren ersten Informationsaustauschleitungen (10), durch die die Geräte (6a-6z) in einer Reihe verbunden sind;
einer zweiten Informationsaustauschleitung (10), durch die ein Gerät (6a-6z) an einem Ende der in Reihe verbundenen Geräte (6a-6z) und die erste Informationsaustauscheinheit (16) miteinander verbunden sind, wobei die adressierten Abfragenachrichten von der ersten Informationsaustauscheinheit (16) in einer ersten Richtung durch die Reihe befördert werden;
einer zweiten Informationsaustauscheinheit (17), die in der übergeordneten Steuereinheit (2) vorgesehen ist, wobei die adressierten Abfragenachrichten in der entgegengesetzten Richtung durch die zweite Informationsaustauscheinheit (17) gesandt werden;
einer dritten Informationsaustauschleitung (10), durch die ein Gerät (62) am anderen Ende der in Reihe verbundenen Geräte (6a-6z) und die zweite Informationsaustauscheinheit (17) verbunden sind;
gekennzeichnet durch
Mittel, die jedes der wenigstens drei Geräte (6a-6z) dazu veranlassen, durch die Reihe in einer zur ersten Richtung entgegengesetzten Richtung ein Antwortsignal an die erste Informationsaustauscheinheit (16) zu schicken, sooft ein Gerät (6a-6z) von der ersten Informationsaustauscheinheit (16) eine seine Adresse tragende Abfragenachricht empfängt;
Mittel, die jedes der mehreren Geräte (6a-6z) dazu veranlassen, durch die Reihe in der ersten Richtung an die zweite Informationsaustauscheinheit (17) ein Antwortsignal zu schicken, sooft das Gerät (6a-6z) von der zweiten Informationsaustauscheinheit (17) eine seine Adresse tragende Abfragenachricht empfängt.

5. Informationsaustauschsystem nach Anspruch 4, ferner mit:
einer Umschalteinheit (19) in der übergeordneten Steuereinheit (2), die entweder die erste oder die zweite Informationsaustauscheinheit (16, 17) betätigt.

6. Informationsaustauschsystem nach Anspruch 5, ferner mit:
einer Überwachungseinheit (18) in der übergeordneten Steuereinheit, die die Nachrichten überwacht und die jeweils andere der ersten und zweiten Informationsaustauscheinheiten (16, 17) betätigt, wenn die Überwachungseinheit (18) feststellt, daß bei der Nachrichtenübertragung eine Anomalie aufgetreten ist.

7. Informationsaustauschsystem nach Anspruch 4, 5 oder 6, bei dem jedes der Geräte (6a-6z) eine untergeordnete Einheit mit dritten und vierten Informationsaustauscheinheiten (26, 27) enthält, die die Abfragenachrichten und Antwortsignale senden und empfangen.

8. Informationsaustauschsystem nach Anspruch 7, bei dem die ersten und zweiten Informationsaustauscheinheiten (16, 17) der übergeordneten Steuereinheit (2) und jede der untergeordneten Steuereinheiten eine Sendevorrichtung und eine Empfangsvorrichtung besitzen, wobei die ersten, zweiten und dritten Informationsaustauschleitungen eine Sendeleitung (10a) und eine Empfangsleitung (lOb) umfassen.

9. Informationsaustauschsystem nach Anspruch 10, bei dem jede der ersten, zweiten, dritten und vierten Informationsaustauscheinheiten mit einer Lichtemissionsvorrichtung und mit einer Lichtempfangsvorrichtung für den optischen Informationsaustausch versehen ist und die Informationsaustauschleitungen Lichtleitfasern sind.

10. Informationsaustauschsystem nach irgendeinem der Ansprüche 4 bis 9, bei dem die Geräte (6a-6z) Spielautomaten sind.

11. Informationsaustauschsystem nach irgendeinem der Ansprüche 4 bis 10, mit Mitteln zum Steuern der Sende-/Empfangseinheiten (26, 27) in der Weise, daß irgendein gewähltes der Geräte (6a-6z), das an der ersten Sende-/Empfangseinheit (26) eine seine Adresse tragende Nachricht empfängt, von dieser ersten Sende-/Empfangseinheit (26) ein Antwortsignal sendet, und irgendein gewähltes der Geräte (6a-6z), das an seiner zweiten Sende-/Empfangseinheit (27) eine seine Adresse tragende Nachricht empfängt, von dieser zweiten Sende-/Empfangseinheit (27) eine Antwort sendet.

## Revendications

1. Méthode de communication, dans laquelle des messages adressés sont émis par une unité de commande pilote (2) ayant une première unité de communication (16) et dans laquelle on obtient des réponses correspondantes de l'un quelconque choisi d'au moins trois appareils adressés (6a-6z), comprenant les étapes suivantes :
raccorder tous les appareils (6a-6z) en une série par l'intermédiaire de premières lignes de communication (10) et de premières et deuxièmes unités émettrices/réceptrices (26, 27) prévues pour chaque appareil (6a-6z);
raccorder un premier de ces appareils (6a) à la première unité de communication (16) par l'intermédiaire d'une deuxième ligne de communication (10);
raccorder une deuxième unité de communication (17) de l'unité de commande pilote (2) au dernier appareil de cette série d'appareils (6a-6z) par l'intermédiaire d'une troisième ligne de communication (10) pour former un circuit en boucle;
activer l'une des première et deuxième unités de communication (16,17) de façon à transmettre un message adressé dans l'une d'une première direction et de la direction opposée respectivement,
transférer ce message adressé dans une première direction à travers ladite série depuis un appareil (6a-6z) à un autre appareil adjacent (6a-6z) de façon à effectuer une intercommunication entre l'unité de commande pilote (2) et l'un quelconque choisi de ces appareils, et, lorsqu'il est impossible de continuer l'intercommunication avec une partie de ces appareils en utilisant seulement l'une des première et deuxième unités de communication (16,17) du fait d'une perturbation des lignes, l'autre des première et deuxième unités de communication (17,16) est activée de façon à communiquer avec cette partie des appareils (6a-6z); caractérisée en ce que
chaque appareil émet un signal de réponse à travers ladite série dans une direction opposée à la première direction chaque fois qu'il reçoit de la première unité de communication un message portant son adresse et qu'il envoie également le message à l'appareil suivant dans la première direction; et qu'une décision pour savoir si oui ou non la cause de cette impossibilité d'intercommunication est due à cette perturbation des lignes est effectuée en contrôlant si l'unité de commande pilote (2) a reçu à l'intérieur d'une période fixée à sa deuxième unité de communication (16,17) ledit message envoyé par l'appareil adressé (6a-65z) dans la première direction.

2. Méthode de communication selon la revendication 1, dans laquelle chaque appareil (6a-6z) émet un signal de réponse sur les premières lignes de communication (10) à travers ladite série dans la première direction chaque fois qu'il reçoit un message portant son adresse transmis dans la direction opposée sur les premières lignes de communication (10) depuis la deuxième unité de communication (17).

3. Méthode de communication selon la revendication 1 opu la revendication 2, dans laquelle les unités émettrices/réceptrices (26,27) sont commandées de telle sorte que tout appareil sélectionné parmi ces appareils (6a-6z) recevant un message portant son adresse au niveau de sa première unité émettrice/réceptrice (26) émet un signal de réponse en provenance de cette première unité émettrice/réceptrice (26), et que tout appareil sélectionné parmi ces appareils recevant un message portant son adresse au niveau de sa deuxième unité émettrice/réceptrice (27) émet une réponse en provenance de cette deuxième unité émettrice/réceptrice (27).

4. Système de communication pour transmettre des messages à au moins trois appareils adressés (6a-6z) et pour en transmettre en provenance de ces appareils, lesquels sont susceptibles d'émettre et de recevoir ces messages par l'intermédiaire de deux unités émettrices/réceptrices (26,27), comprenant :
une unité de commande pilote (2) pour émettre des messages d'interrogation adressés;
une première unité de communication (16) dans cette unité de commande pilote (2), les messages d'interrogation adressés étant transmis par l'intermédiaire de la première unité de communication (16);
une multiplicité de premières lignes de communication (10) par l'intermédiaire desquelles ces appareils (6a-6z) sont raccordés en une série;
une deuxième ligne de communication (10) par l'intermédiaire de laquelle un appareil (6a-6z) situé à une extrémité de ces appareils raccordés en série (6a-6z) et la première unité de communication (16) sont raccordées, d'où il résulte que les messages d'interrogation adressés sont convoyés par la première unité de communication (16) dans une première direction à travers ladite série;
une deuxième unité de communication (17) prévue dans l'unité de commande pilote (2), les messages d'interrogation adressés étant transmis dans la direction opposée par l'intermédiaire de la deuxième unité de communication (17);
une troisième ligne de communication (10) par l'intermédiaire de laquelle un appareil (6z) situé à l'autre extrémité de ces appareils raccordés en série (6a-6z) et la deuxième unité de communication (17) sont raccordés, caractérisé par
des moyens faisant que chacun de ces trois appareils au moins (6a-6z) convoie un signal de réponse à la première unité de communication (16) à travers cette série dans une direction opposée à la première direction, chaque fois qu'un appareil (6a-6z) reçoit de cette première unité de communication (16) un message d'interrogation portant son adresse;
des moyens faisant que chacun de cette multiplicité d'appareils (6a-6z) convoie un signal de réponse à la deuxième unité de communication (17) à travers ladite série dans la première direction chaque fois qu'un appareil (6a-6z) reçoit de la deuxième unité de communication (17) un message d'interrogation portant son adresse.

5. Système de communication selon la revendication 4, comprenant en outre une unité de commutation (19) dans l'unité de commande pilote (2) pour rendre active l'une ou l'autre de la première et de la deuxième unité de communication (16,17).

6. Système de communication selon la revendication 5, comprenant en outre une unité de contrôle (18) dans l'unité de commande pilote pour contrôler le message et pour rendre active l'autre des première et deuxième unités de communication (16,17) lorsque cette unité de contrôle (18) détecte qu'une anomalie de transmission des messages a eu lieu.

7. Système de communication selon l'une des revendications 4, 5 ou 6, dans lequel chacun des appareils (6a-6z) a une unité secondaire ayant une troisième et une quatrième unité de communication (26,27) pour émettre et recevoir ces messages d'interrogation et ces signaux de réponse.

8. Système de communication selon la revendication 7, dans lequel les première et deuxième unités de communication (16,17) de l'unité de commande pilote (2) et chacune des unités secondaires ont un dispositif d'émission et un dispositif de réception, et dans lequel les première, deuxième et troisième lignes de communication comprennent une ligne de transmission (10a) et une ligne de réception (10b).

9. Système de communication selon la revendication 8, dans lequel chacune des première, deuxième, troisième et quatrième unités de communication est équipée d'un dispositif photoluminescent et d'un dispositif photorécepteur pour une communication optique, et dans lequel ces lignes de communication sont des câbles de fibres optiques.

10. Système de communication selon l'une des revendications 4 à 9, dans lequel les appareils (6a-6z) sont des machines à sous.

11. Système de communication selon l'une quelconque des revendications 4 à 10, comprenant des moyens pour commander ces unités émettrices/réceptrices (26,27) de telle sorte que tout appareil sélectionné de cette multiplicité d'appareils (6a-6z) recevant un message portant son adresse au niveau de la première unité émettrice/réceptrice (26) émet un signal de réponse en provenance de cette première unité émettrice/ réceptrice (26) et que tout appareil sélectionné de cette multiplicité d'appareils (6a-6z) recevant un message portant son adresse au niveau de la deuxième unité émettrice/réceptrice (27) émet une réponse en provenance de cette deuxième unité émettrice/réceptrice (27).
